# EUROPÄISCHE PATENTSCHRIFT

(11) **EP 1 650 596 B1**
(45) Veröffentlichungstag und Bekanntmachung des Hinweises auf die Patenterteilung: **26.03.2014**
(21) Anmeldenummer: 05022985.5
(22) Anmeldetag: 21.10.2005
(51) Int. Cl.: G02F 1/01

(54) **Optisches System mit veränderlichen Abbildungseigenschaften und Verfahren zur Einstellung veränderlicher Abbildungseigenschaften**
Optical system with variable imaging characteristics and method for adjusting variable imaging characteristics
Système optique muni de caractéristique d'affichage modifiables et procédé destiné à l'ajustage de caractéristiques d'affichage modifiables

(30) Priorität: 25.10.2004 DE 102004051969
(43) Veröffentlichungstag der Anmeldung: 26.04.2006
(73) Patentinhaber: Deutsches Zentrum für Luft- und Raumfahrt e.V., 51147 Köln (DE)
(72) Erfinder: Rogalla, Marcel, 12555 Berlin (DE); Krüger, Sven, 10245 Berlin (DE); Börner, Anko, Dr.-Ing., 12557 Berlin (DE); Scheele, Martin, Dr.rer. nat., 14656 Brieselang (DE); Schuster, Reinhard, Dr.rer.nat., 14532 Kleinmachnow (DE)
(74) Vertreter: Zucker, Volker

(56) Entgegenhaltungen:
- WO-A-99/22262
- WO-A1-00/45608
- DE-A1- 10 227 120
- DE-C1- 4 402 775
- US-A- 5 305 012

## Beschreibung

Die Erfindung betrifft ein optisches System mit veränderlichen Abbildungseigenschaften und ein Verfahren zur Einstellung veränderlicher Abbildungseigenschaften.

Zur Veränderung der Abbildungseigenschaften optischer Systeme ist es bekannt, mittels mechanischer Veränderungen an den optischen Komponenten die Abbildungseigenschaften zu verändern. Beispielsweise wird die Blende einer Kamera mechanisch geöffnet oder geschlossen, womit sich Lichtstärke, Tiefenschärfe, Kontrast und ähnliches beeinflussen lässt. Ein weiterer Anwendungsfall sind Zoom-Objektive. Bei Zoom-Objektiven werden die Positionen einzelner Linsen oder von Linsengruppen zueinander verändert. Dadurch lassen sich unterschiedliche Brennweiten und demzufolge unterschiedliche Abbildungsmaßstäbe einstellen.

Es gibt Anwendungsgebiete, bei denen die Verwendung von mechanischen Baugruppen zur Veränderung der Abbildungseigenschaften zu Problemen führen kann. Folgende Beispiele veranschaulichen die Probleme:
- Selbst sehr kleine Bewegungen auf Satelliten führen zur Erzeugung von Drehimpulsen, die eine Rotation des Satelliten hervorrufen und durch Steuermanöver kompensiert werden müssen.
- In Umgebungen, die durch feinkörnigen Staub belastet sind, können kleine Partikel, die in das optische System eindringen, die mechanischen Bewegungen stören.

Der Erfindung liegt daher das technische Problem zugrunde, ein optisches System mit veränderlichem Abbildungsmaßstab zu schaffen, das weitgehend auf bewegliche Elemente oder Teile verzichtet, sowie ein zugehöriges Verfahren zur Verfügung zu stellen. Ein ähnliches optisches System, das die Merkmale des Oberbegriffs von Anspruch 1 aufweist, ist aus WO 00/45608 bekannt.

Die Lösung des technischen Problems ergibt sich durch die Gegenstände mit den Merkmalen der Ansprüche 1 und 5. Weitere vorteilhafte Ausgestaltungen ergeben sich aus den Unteransprüchen.

Hierzu ist das mindestens eine optische Element als dynamischer Lichtmodulator ausgebildet, wobei dem dynamischen Lichtmodulator eine Recheneinheit zugeordnet ist, mittels derer dynamisch adressierbare optische Funktionen am Lichtmodulator einstellbar sind. Dabei wird die Erkenntnis ausgenutzt, dass Abbildungseigenschaften optischer Systeme durch die Verwendung dynamischer Lichtmodulatoren verändert werden können. Diese adaptiven optischen Elemente, die auf unterschiedlichen Technologien basieren können, sind dadurch gekennzeichnet, dass nicht eine feste Phasenfunktion, sondern dynamisch adressierbare optische Funktionen dargestellt werden können. Dynamische Lichtmodulatoren auf Displaybasis bestehen im Regelfall aus einer Matrix einzeln ansteuerbarer Elemente, mit deren Hilfe sich sowohl Amplitude als auch Phase einer einfallenden Front elektromagnetischer Wellen beeinflussen lassen. Diese Lichtmodulatoren können dann durch die Recheneinheit hinsichtlich Amplituden- und Phasenfunktionen je nach gewünschter Abbildungseigenschaft angesteuert werden. Mechanische Bewegungen optischer Komponenten sind daher weitgehend nicht notwendig, weil durch die Funktionalität des Lichtmodulators je nach verwendeter Technik die Modifikation des optischen Systems, die bisher durch die Bewegung der optische Komponenten realisiert wird , durch optische Funktionen nachempfunden werden kann.

Der Lichtmodulator ist als transmissiver Lichtmodulator ausgebildet, wobei vorzugsweise der Lichtmodulator als Flüssigkristall-Array ausgebildet ist.

Alternativ zur beanspruchten Erfindung kann auch ein reflektiver Lichtmodulator zur Anwendung kommen, wobei vorzugsweise mindestens ein Mikro-Spiegel-Array zur Anwendung kommt, wobei die Spiegel beispielsweise mittels Piezoelementen verstellbar sind. Alternativ zum Mikro-Spiegel-Array kann der reflektive Lichtmodulator auch als Membranspiegel ausgebildet sein. Dieser besteht vorzugsweise aus einer sehr dünnen Siliziumnitrid-Membran von beispielsweise 1 µm Dicke, die einige 10 µm über einem Elektrodenarray aufgespannt ist. Durch elektrostatische Anziehung kann die Membran gezielt rechnergesteuert sehr schnell verformt werden, wodurch mit der Membran verbundene Spiegel verkippt werden. Die Spiegel werden dabei vorzugsweise durch eine Aluminium-Beschichtung auf einem Substrat realisiert, das mit der Membran verbunden ist Alternativ kann die Membran aus dem Substrat herausgebildet werden.

Des Weiteren sind Ausführungsformen denkbar, wo transmissive und reflektive Lichtmodulatoren kombiniert werden.

In der Ausführungsform wird mittels der Lichtmodulatoren ein veränderlicher Abbildungsmaßstab erzeugt. Dabei wird ausgenutzt, dass man in der Lage ist, von einem gewünschten Beugungsbild auf die Beugungsstruktur zurückzurechnen. Betrachtet man nun den gewünschten Abbildungsmaßstab als Beugungsbild, so kann man auf die gewünschte Beugungsstruktur zurückrechnen. Dabei sind je nach Beugungsbild gegebenenfalls zwei oder mehrere Beugungen zu überlagern. In diesem Fall sind dann mindestens zwei dynamische Lichtmodulatoren zu verwenden. Vorzugsweise erfolgt auch die Realisierung unterschiedlicher Abbildungsmaßstäbe mittels der transmissiven Lichtmodulatoren. Somit können Linsenfunktionen im Allgemeinen und Zoomobjektive im speziellen nachgebildet werden.

In einem Vergleichsbeispiel wird mittels des Lichtmodulators eine verstellbare Blende nachgebildet, wobei hierzu vorzugsweise die transmissiven Lichtmodulatoren zur Anwendung kommen.

In einem weiteren Vergleichsbeispiel wird mittels des oder der Lichtmodulatoren eine veränderliche Bildfeldauswahl erzeugt. Dabei werden vorzugsweise reflektive Lichtmodulatoren verwendet.

In einem weiteren Vergleichsbeispiel werden mittels des oder der Lichtmodulatoren dynamische Abberationskorrekturen durchgeführt. Das gestattet die Korrektur von Abbildungsfehlern.

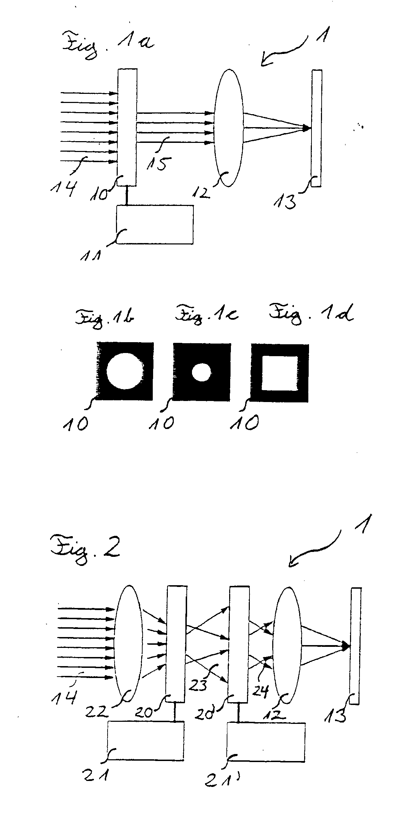

Die Erfindung wird nachfolgend anhand des Ausführungsbeispiels nach Fig. 2 näher erläutert. Die Fig. zeigen:
- Fig. 1a: eine schematische Darstellung eines optischen Systems mit einer veränderlichen Blendenfunktion,
- Fig. 1b: eine Darstellung einer ersten Blendenfunktion,
- Fig. 1c: eine Darstellung einer zweiten Blendenfunktion,
- Fig. 1d: eine Darstellung einer dritten Blendenfunktion,
- Fig. 2: eine schematische Darstellung eines optischen Systems mit einem veränderlichen Abbildungsmaßstab,
- Fig. 3a: eine schematische Darstellung eines optischen Systems mit veränderlicher Bildfeldauswahl,
- Fig. 3b: eine Darstellung einer ersten Bildfeldauswahl und
- Fig. 3c: eine Darstellung einer zweiten Bildfeldauswahl.

In der Fig. 1 a ist ein optisches System 1 mit einer veränderlichen Blendenfunktion dargestellt. Das optische System 1 umfasst einen transmissiven Lichtmodulator 10, der von einer Recheneinheit 11 angesteuert wird, eine Sammellinse 12 und eine Fokalebene 13, auf der mindestens ein photosensitiver Sensor angeordnet ist. Der photosensitive Sensor ist dabei beispielsweise als CCD- oder CMOS-Matrix ausgebildet. Der transmissive Lichtmodulator 10 ist beispielsweise als LCD-Matrix ausgebildet. Das Transmissionsvermögen der einzelnen Pixel der LCD-Matrix ist elektrisch einstellbar, so dass pixelweise näherungsweise Werte zwischen 0-100% eingestellt werden können. Je nach Ansteuerung der Pixel des Lichtmodulators 10 stellt sich dann eine gewünschte Blendenform am Lichtmodulator 10 ein, was exemplarisch in den Fig. 1b-d dargestellt ist. Die dunklen Stellen weisen dabei ein Transmissionsvermögen von 0 und die hellen Stellen von 1 auf. Eine einfallende Wellenfront 14 trifft nun auf den Lichtmodulator 10, an dem durch die Recheneinheit 11 eine gewünschte Blendenform elektrisch eingestellt ist. Die Blende begrenzt die Wellenfront 14 nämlich, wobei die räumlich begrenzte Wellenfront 15 durch die Sammellinse 12 auf den Sensor auf der Fokalebene 13 projiziert wird. Dabei sind alle Elemente des optischen Systems 1 ortsfest, so dass keine beweglichen Elemente vorhanden sind.

In der Fig. 2 ist ein erfindungsgemäßes optisches System 1 zur Einstellung eines veränderlichen Abbildungsmaßstabes dargestellt. Dieses Zoom-Objektiv umfasst einen ersten Lichtmodulator 20 und einen zweiten Lichtmodulator 20', denen jeweils eine Recheneinheit 21, 21' zugeordnet ist. Ebenso ist es denkbar, die beiden Recheneinheiten 21, 21' in eine einzige gemeinsame Recheneinheit zu integrieren. Weiter umfasst das optische System 1 wieder eine Sammellinse 12 und eine Fokalebene 13. Zwischen dem Objekt und dem ersten Lichtmodulator 20 ist eine Eingangsoptik 22 angeordnet. Die vom Objekt einfallende Wellenfront 14 trifft auf die Eingangsoptik 22 und von dort auf die beiden Lichtmodulatoren 20, 20', die wieder als transmissive Lichtmodulatoren ausgebildet sind. Durch Veränderung der Amplituden- und Phasenfunktion der Wellenfront 23, 24 kann der Abbildungsmaßstab dynamisch geändert werden. Mittels der Lichtmodulatoren 20, 20' wird nun eine verstellbare Linsengruppe nachgebildet. Hierzu wird beispielsweise vorab festgelegt, innerhalb welchen Bereiches mit welcher Schnittweite der Abbildungsmaßstab veränderbar sein soll. Da die Position der Eingangsoptik 22 und der Sammellinse 12 fest und deren optisches Verhalten konstant ist, kann ein Beugungsbild bestimmt werden, was vor der Sammellinse 12 sein muss, um den gewünschten Abbildungsmaßstab auf der Fokalebene zu erzielen. Zu diesem Beugungsbild kann eine zugehörige Beugungsstruktur berechnet werden, die das gewünschte Beugungsbild erzeugt. Diese Beugungsstruktur wird dann durch die Lichtmodulatoren 20, 20' eingestellt. Diese Berechnung ist gleichbedeutend mit der Berechnung einer Linsengruppe, die nachgebildet wird. Dabei sind Fälle denkbar, wo auch mehr als zwei Lichtmodulatoren 20, 20' notwendig sind, um die gewünschte Beugungsstruktur zu erzeugen.

Aufgrund der Tatsache, dass die Beugung auch von der Frequenz abhängig ist, wird dem Zoomobjektiv vorzugsweise ein Filter zugeordnet, der beispielsweise nur Licht in einen Wellenlängenintervall durchlässt, wobei die Halbwertsbereite beispielsweise 50 nm beträgt. Innerhalb dieses Wellenlängenbereiches ist dann die Dispersion vernachlässigbar.

Der Filter wird dabei vorzugsweise vor den Lichtmodulatoren angeordnet, so dass nur noch ein eng begrenzter Wellenlängenbereich in die Lichtmodulatoren eintritt.

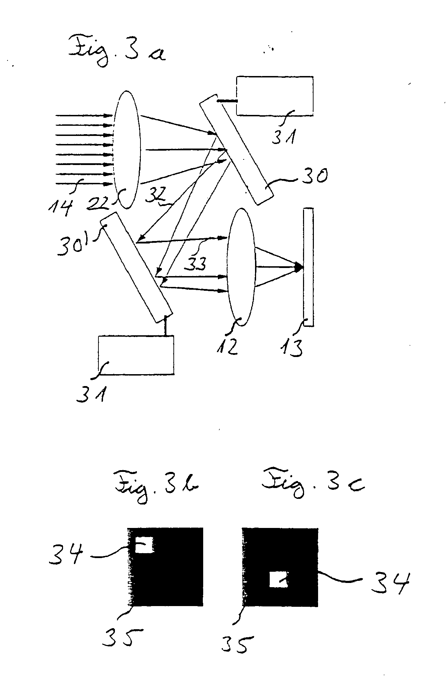

In der Fig. 3a ist ein optisches System 1 zur Erzeugung einer veränderlichen Bildfeldauswahl dargestellt. Das optische System 1 umfasst wieder eine Eingangsoptik 22, zwei Lichtmodulatoren 30, 30' mit zugeordneten Recheneinheiten 31, 31', eine Sammellinse 12 und eine Fokalebene 13. Die beiden Lichtmodulatoren 30, 30' sind dabei als reflektive Lichtmodulatoren ausgebildet. Durch Veränderung der Amplituden- und Phasenfunktion der Wellenfront 32, 33 kann ein Ausschnitt 34 aus einem großen, virtuellen Bildfenster 35 (siehe Fig. 3b und 3c) selektiert und durch die Sammellinse 12 auf einen Sensor in der Fokalebene 13 projiziert werden. Dies gestattet die dynamische Auswahl eines Ausschnittes 34 aus einem Blickfeld ohne mechanische Veränderungen. Damit lassen sich kleine und somit preiswerte Sensoren verwenden.

## Patentansprüche

1. Optisches System (1), umfassend mindestens einen photosensitiven Sensor, der auf einer Fokalebene (13) angeordnet ist, mindestens ein optisches Element, dessen Abbildungseigenschaften veränderlich sind, wobei das optische Element mit mindestens zwei dynamischen Lichtmodulatoren (20, 20') ausgebildet ist, wobei den Lichtmodulatoren (20, 20') jeweils eine Recheneinheit (21, 21') oder eine gemeinsame Recheneinheit zugeordnet ist, mittels derer dynamisch adressierbare optische Funktionen am Lichtmodulator (20, 20') einstellbar sind, und die Lichtmodulatoren (20, 20') als transmissive Lichtmodulatoren ausgebildet sind, **dadurch gekennzeichnet, dass** das optische System eine zwischen optischem Element und Fokalebene (13) angeordnete Sammellinse (12) umfasst, und zu einem Abbildungsmaßstab ein Beugungsbild bestimmt wird, das vor der Sammellinse (12) sein muss, um den gewünschten Abbildungsmaßstab auf der Fokalebene zu erzielen, und zu dem Beugungsbild eine Beugungsstruktur berechenbar ist, **dadurch gekennzeichnet, dass** das optische System eine zwischen optischem Element und Fokalebene (13) angeordnete Sammellinse (12) umfasst, und die dann durch die Lichtmodulatoren (20, 20') einstellbar ist.

2. Optisches System (1) nach Anspruch 1, **dadurch gekennzeichnet, dass** die Lichtmodulatoren (20, 20') als Flüssigkristall-Array ausgebildet sind, deren Transmissionsvermögen elektrisch steuerbar ist.

3. Optisches System (1) nach Anspruch 1 oder 2, **dadurch gekennzeichnet, dass** zwischen dem Objekt und dem eingangsseitigen Lichtmodulator (20) eine Eingangsoptik (22) angeordnet ist.

4. Optisches System (1) nach einem der vorangegangenen Ansprüche, **dadurch gekennzeichnet, dass** dem optischen System (1) ein Filter zugeordnet ist.

5. Verfahren zur Einstellung veränderlicher Abbildungsmaßstäbe mittels eines optischen Systems (1) nach Anspruch 1, **dadurch gekennzeichnet, dass** in der Recheneinheit (21, 21') zu einem gewünschten Abbildungsmaßstab ein Beugungsbild bestimmt wird, das vor der Sammellinse (12) sein muss, um den gewünschten Abbildungsmaßstab auf der Fokalebene zu erzielen, wobei zu dem Beugungsbild eine Beugungsstruktur berechnet wird, die dann durch die Lichtmodulatoren (20, 20') eingestellt wird.

## Claims

1. Optical system (1) comprising at least one photosensitive sensor, which is arranged on a focal plane (13), at least one optical element of which the illustrating characteristics are variable, wherein the optical element is formed by at least two dynamic light modulators (20, 20'), wherein an arithmetic logic unit (21, 21') is assigned in each case to the light modulators (20, 20') or a common arithmetic logic unit, by means of which dynamically addressable optical functions are adjustable at the light modulator (20, 20'), and the light modulators (20, 20') are designed as transmissive light modulators, **characterised in that** the optical system comprises collective lenses (12) arranged between the optical element and focal plane (13), and a diffraction pattern is determined for the image scale which must be in front of the collective lens (12) in order to attain the desired image scale on the focal plane, and a diffraction structure can be calculated for the diffraction pattern, which is then adjustable by the light modulators (20, 20').

2. Optical system (1) according to claim 1, **characterised in that** the light modulators (20, 20') is designed as a liquid crystal array, the transmission capacities of which are electrically controllable.

3. Optical system (1) according to claim 1 or 2, **characterised in that** entrance optics (22) are arranged between the object and the input-side light modulator (20).

4. Optical system (1) according to any one of the preceding claims, **characterised in that** a filter is assigned to the optical system (1).

5. Method for the adjustment of changeable image scales by means of an optical system (1) according to claim 1, **characterised in that** a diffraction pattern is determine in the arithmetic logic unit (21, 22) for the desired image scale, which must be in front of the collective lens (12) in order to attain the desired image scale on the focal plane, wherein a diffraction structure is calculated for the diffraction pattern, which is then adjustable by the light modulators (20, 20').

## Revendications

1. Système optique (1), comprenant au moins un capteur photosensible, qui est disposé sur un plan focal (13), au moins un élément optique, dont les caractéristiques de reproduction sont variables, sachant que l'élément optique est réalisé avec au moins deux modulateurs de lumière (20, 20') dynamiques, sachant que respectivement une unité de calcul (21, 21') ou une unité de calcul commune est associée aux modulateurs de lumière (20, 20'), au moyen de laquelle des fonctions optiques pouvant être adressées de manière dynamique peuvent être réglées sur le modulateur de lumière (20, 20'), et que les modulateurs de lumière (20, 20') sont réalisés sous la forme de modulateurs de lumière transmittifs, **caractérisé en ce que** le système optique comprend une lentille convergente (12) disposée entre l'élément optique et le plan focal (13), et **en ce qu'**on définit une image de diffraction pour obtenir une échelle de reproduction, laquelle image de diffraction doit être en amont de la lentille convergente (12) afin d'obtenir sur le plan focal l'échelle de reproduction souhaitée, et **en ce qu'**une structure de diffraction peut être calculée pour obtenir une image de diffraction, laquelle structure de diffraction peut être réglée alors par les modulateurs de lumière (20, 20').

2. Système optique (1) selon la revendication 1, **caractérisé en ce que** les modulateurs de lumière (20, 20') sont réalisés sous la forme d'un réseau à cristaux liquides, dont le pouvoir de transmission peut être commandé de manière électrique.

3. Système optique (1) selon la revendication 1 ou 2, **caractérisé en ce qu'**une optique d'entrée (22) est disposée entre l'objet et le modulateur de lumière (20) côté entrée.

4. Système optique (1) selon l'une quelconque des revendications précédentes, **caractérisé en ce qu'**un filtre est associé au système optique (1).

5. Procédé servant à régler des échelles de reproduction variables au moyen d'un système optique (1) selon la revendication 1, **caractérisé en ce qu'**on définit une image de diffraction dans l'unité de calcul (21, 21') pour obtenir une échelle de reproduction souhaitée, laquelle image de diffraction doit être en amont de la lentille convergente (12) afin d'obtenir l'échelle de reproduction souhaitée sur le plan focal, sachant qu'une structure de diffraction est calculée pour obtenir l'image de diffraction, laquelle structure de diffraction est alors réglée par les modulateurs de lumière (20, 20').
